# EUROPEAN PATENT SPECIFICATION

(11) **EP 2 845 776 B1**
(45) Date of publication and mention of the grant of the patent: **02.03.2016**
(21) Application number: 14181511.8
(22) Date of filing: 20.08.2014
(51) Int. Cl.: B60T 7/22, B60W 30/08, G01M 17/007, G05D 1/02, G08G 1/16

(54) **System and method for testing crash avoidance technologies**
System und Verfahren zum Testen von Kollisionsvermeidungstechnologien
Système et procédé pour tester des technologies d'évitement de collision

(30) Priority: 05.09.2013 US 201361874274 P; 05.09.2013 US 201361874267 P; 05.09.2013 US 201361874264 P; 24.10.2013 US 201314062287
(43) Date of publication of application: 11.03.2015
(73) Proprietor: Dynamic Research, Inc., Torrance, CA 90501 (US)
(72) Inventor: Kelly, Joseph, Torrance, CA 90501 (US); Broen, Peter, Torrance, CA 90501 (US); Silberling, Jordan, Torrance, CA 90501 (US); Zellner, John, Torrance, CA 90501 (US)
(74) Representative: Viering, Jentschura & Partner mbB Patent- und Rechtsanwälte

(56) References cited:
- US-A1- 2009 292 468
- US-A1- 2011 270 467
- US-A1- 2012 086 582
- US-A1- 2013 162 479

## Description

### 1.0 Technical Field

The present invention relates to a guided soft target system according to the pre-characterizing part of claim 1 and a method of controlling the speed of a dynamic motion element (DME) used in testing a crash avoidance technology according to the pre-characterizing part of claim 5.

### 2.0 Background

The system disclosed herein can be used with, but is not limited to, vehicles employed in crash avoidance technologies disclosed in the following patent applications developed by the same inventors and assigned to the same assignee: U.S. Patent Application number 14/050039 entitled "System and Method for testing Crash Avoidance Technologies" filed on October 9, 2013 by Joseph Kelly et al; U.S. Patent Application number 14/050048 entitled "System and Method for testing Crash Avoidance Technologies" filed on October 9, 2013 by Joseph Kelly et al; U.S. Patent Application number 61/874274 entitled "Master-Slave Automated Coordinated Vehicle Control" filed September 5, 2013 by Joseph Kelly et al; U.S. Patent Application number 61/874267 entitled "Rigid Belt Drive Tensioner" filed September 5, 2013 by Joseph Kelly et al; U.S. Patent Application number 61/874264 entitled "Robotic Hydraulic Brake Master Cylinder" filed September 5, 2013 by Joseph Kelly et al; U.S. Patent Application number 13/357526 entitled "System and Method for Testing Crash Avoidance Technologies" filed January 24, 2012 by Joseph Kelly et al (issued as U.S. Patent 8,447,509); U.S. Patent Application number 61/507539 entitled "Guided Soft Target For Full Scale Advanced Crash Avoidance Technology Testing" filed on July 13, 2011 by Joseph Kelly et al; U.S Patent Application number 61/578452 entitled "Guided Soft Target For Full Scale Advanced Crash Avoidance Technology Testing" filed on December 21, 2011 filed by Joseph Kelly et al; U.S Patent Application number 61/621597 entitled "Collision Partner, System and Method" filed on April 9, 2012 by Joseph Kelly et al; U.S Patent Application number 61/639745 entitled "Devices, Systems, And Methods For Testing Crash Avoidance Technologies" filed on April 27, 2012 by Joseph Kelly et al; U.S. Patent Application number 13/532366 entitled "Devices, Systems, And Methods For Testing Crash Avoidance Technologies" filed on June 25, 2012 by Joseph Kelly et al (issued as U.S. Patent 8,428,863); U.S. Patent Application number 13/532383 entitled "Devices, Systems, And Methods For Testing Crash Avoidance Technologies" filed on June 25, 2012 by Joseph Kelly et al (issued as U.S. Patent 8,428,864); U.S. Patent Application number 13/532396 entitled "Devices, Systems, And Methods For Testing Crash Avoidance Technologies" filed on June 25, 2012 by Joseph Kelly et al (issued as U.S. Patent 8,457,877); U.S. Patent Application number 13/532417 entitled "Devices, Systems, And Methods For Testing Crash Avoidance Technologies" filed on June 25, 2012 by Joseph Kelly et al; and U.S. Patent Application number 13/532430 entitled "Devices, Systems, And Methods For Testing Crash Avoidance Technologies" filed on June 25, 2012 by Joseph Kelly et al.

As Advanced Crash Avoidance Technologies (ACATs) such as Forward Collision Warning (FCW), Crash Imminent Braking Systems and other advanced technologies continue to be developed, the need for full-scale test methodologies that can minimize hazards to test personnel and damage to equipment has rapidly increased. Evaluating such ACAT systems presents many challenges. For example, the evaluation system should be able to deliver a potential Soft Collision Partner (Soft CP) reliably and precisely along a trajectory that would ultimately result in a crash in a variety of configurations, such as rear-ends, head-ons, crossing paths, and sideswipes. Additionally, the Soft Collision Partner should not pose a substantial physical risk to the test driver, other test personnel, equipment, or to subject vehicles in the event that the collision is not avoided. This challenge has been difficult to address. Third, the Soft CP should appear to the subject vehicle as the actual item being simulated, such as a motor vehicle, a pedestrian, or other object. For example, the Soft CP should provide a consistent signature for radar and other sensors to the various subject vehicles, substantially identical to that of the item being simulated. It would be also advantageous for the Soft CP to be inexpensive and repeatedly reusable with a minimum of time and effort.

As disclosed in the inventors' previous patent applications, the Guided Soft Target (GST) system includes a dynamic motion element (DME) as a mobile and controllable platform that carries the Soft CP. The DME is of such shape and dimensions that it can be run over by the vehicle under test (aka the subject vehicle), with little to no damage to either the DME or the subject vehicle. When a collision occurs with the GST system, the subject vehicle impacts the Soft CP, which then absorbs the collision and may collapse. Such a Soft CP is disclosed in U.S. Patent Application 13/532366 (issued as U.S. Patent 8,428,863).

The innovations disclosed in this application are directed to systems that guide and control the components of the GST system including the DME, more specifically to closely control the movements of two or more vehicles in coordinated predetermined movements.
A guided soft target system according to the pre-characterizing part of claim 1 and a method of controlling the speed of a dynamic motion element (DME) used in testing a crash avoidance technology according to the pre-characterizing part of claim 5 is known from the United States patent application publication US 2013/162479. Spatial trajectories are taught in this prior art document to be stored in files which also include speeds of the Subject Vehicle SV and a Dynamic Motion Element DME as part of the guided soft target GST taught by US 2013/1262479.
From the United States patent application publication US 2012/086582 a crash avoidance technology is known including storing a digital map data that can include information about a road network, road geometry, road conditions, and other information. This digital map may include a plurality of nodes and road segments.
From the United States patent application publication US 2011/270467 an active and passive safety testing for automotive vehicles is known where path data includes position and velocity as a vector, including direction as a function of time, typically time after the start of the automotive safety test, or as a function of the position or other characteristic of the automotive test vehicle.

The United States patent application publication US 2009/292468 depicts a collision avoidance scenario involving a host vehicle which may imminently cross paths with a threat vehicle. The host vehicle is equipped with two sensors: a stereo camera system and a radar sensor. The sensors are configured to estimate the position and motion information of the threat vehicle with respect to the host vehicle.

It is an object of the invention to control accuracy of the system according to the pre-characterizing part of claim 1 and the method according to the pre-characterizing part of claim 5. These and other objects are achieved in combination with the features in the pre-characterizing parts by the features in the characterizing parts of claims 1 and 5. Advantageous embodiments are claimed in dependent claims 2 - 4 and 6 - 8.

### 3.0 Summary

A Guided Soft Target System is disclosed that includes a subject vehicle and a dynamic motion element (DME). The subject vehicle may be accelerated at an arbitrary rate to a speed corresponding to the speed in its own predetermined trajectory. Each of the DME vehicles computes its target speed as a ratio of the subject vehicle's speed at each waypoint location, and modulates its speed control to achieve this target speed. To further compensate for timing differences along the target path, each DME computes its longitudinal error along the path relative to its target position, as dictated by the position of the subject vehicle within its own trajectory, and each DME's target speed is modulated in order to minimize the longitudinal error along the predetermined trajectory.

Other aspects of the invention are disclosed herein as discussed in the following Drawings and Detailed Description.

### 4.0 Brief Description of The Drawings

The invention can be better understood with reference to the following figures. The components within the figures are not necessarily to scale, emphasis instead being placed on clearly illustrating example aspects of the invention. In the figures, like reference numerals designate corresponding parts throughout the different views. It will be understood that certain components and details may not appear in the figures to assist in more clearly describing the invention.
FIG. 1 illustrates an example GST System architecture.
FIG. 2 illustrates the trajectories and collision for a subject vehicle and a DME.
FIG. 3 is a flowchart detailing the method for controlling the speed and position of the various vehicles within the GST System.
FIG. 4 illustrates how the controller instructions from the method of FIG.3 are implemented by the GST system.

### 5.0 Detailed Description

Following is a non-limiting written description of example embodiments illustrating various aspects of the invention. These examples are provided to enable a person of ordinary skill in the art to practice the full scope of the invention without having to engage in an undue amount of experimentation. As will be apparent to persons skilled in the art, further modifications and adaptations can be made without departing from the scope of the invention, which is limited only by the claims.

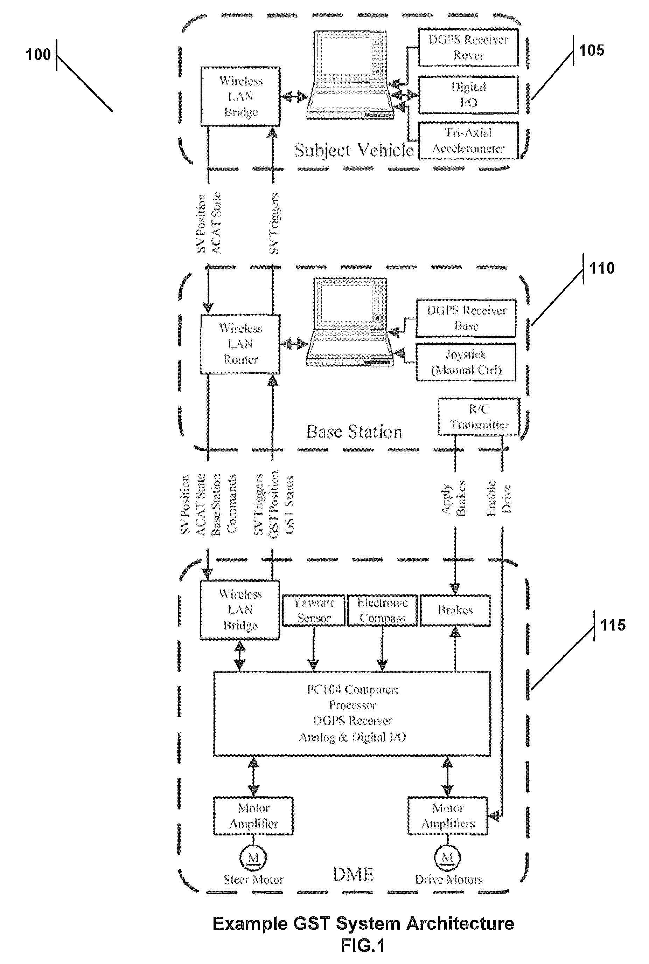

As disclosed in Patent Application SN 13/357526 an example GST system architecture and functions are disclosed. GST systems in various example embodiments may comprise, for instance, a plurality of computers that communicate, for instance via a Wireless Local Area Network (WLAN), and perform various functions. FIG. 1 illustrates the overall architectural layout of an example GST system 100, which may include the following nodes and their associated peripheral equipment, for example: a subject vehicle 105; base station 110; and DME 115.

The computer associated with the subject vehicle 105 may perform the various data I/O functions within the subject vehicle 105, and provide the measured data to the rest of the system. Additionally, the subject computer may control discrete events within the subject vehicle 105. The subject vehicle 105 node may comprise the following components, for example: notebook computer; differential GPS (DGPS) receiver; tri-axial accelerometer; digital I/O board to monitor and control discrete events (e.g., sense ACAT warning on/off, illuminate LEDs, initiate open-loop braking, provide audible alerts); and wireless LAN bridge, for instance.

The base station 110 may act as the central hub for all communications and allow the operator to monitor and control the system. The base station 110 may comprise the following components, for example: DGPS base station receiver; notebook computer; joystick; wireless LAN router; and radio transmitter to provide emergency-stop capability, for instance.

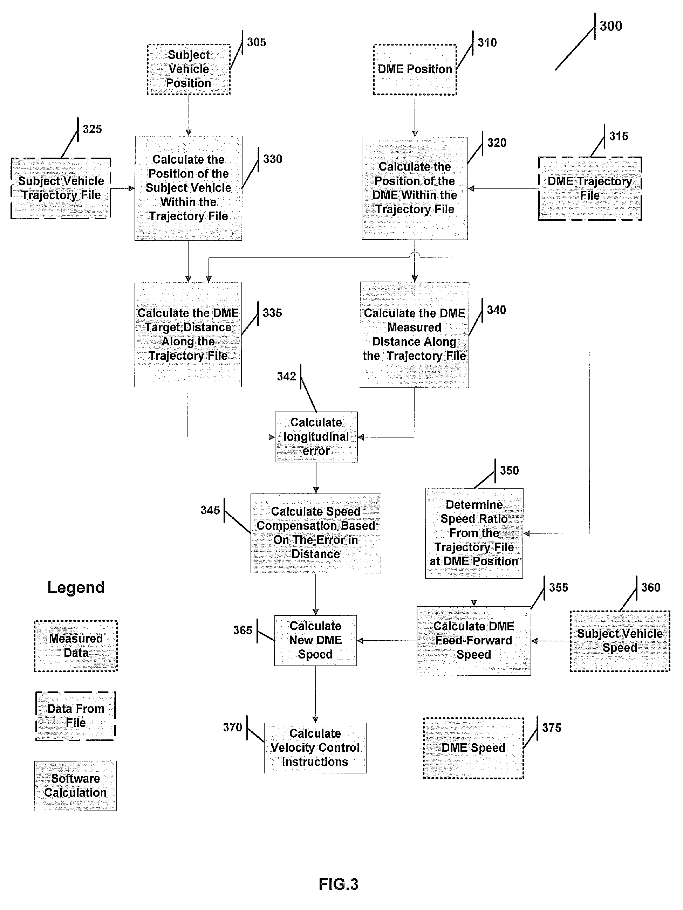

The computer associated with the base station 110 may allow the system operator to run a complete suite of tests from a single location. From the computer associated with the base station 110, the operator may perform the following functions, for example: setup and configuration of subject vehicle 105 and GST computers via remote connection; monitor subject vehicle 105 and GST positions, speeds, system health information and other system information; setup of test configuration; test coordination; post-test data analysis; and selection of GST modes, including, for example: hold; manual; semi-autonomous; and fully autonomous, for instance. Additionally, the functions of the computer associated with the base station 110 may also be accomplished on the computer associated with the subject vehicle 105, reducing the number of computers in the computer network. In this embodiment of a GST, the base station, or operator's console would be located in the subject vehicle 105. The methods used for subject vehicle 105 and DME 115 control and positioning are described below with reference to FIG. 3.

The DGPS receiver in the base station 110 may provide corrections to the roving DGPS receivers in both the DME 115 and the subject vehicle 105 via a WLAN or other communications network. This may be accomplished without the need for a separate DGPS radio modem, minimizing the number of antennas on each node of the system. This may be important in the case of the DME 115, since all connections to antennas are typically made frangible, such that they can separate from the DME 115 in the event of a collision with the subject vehicle 105.

Example DME 115 subsystems may comprise the following components, among others, for instance: wireless LAN bridge; PC104 computer; yaw rate sensor; electronic compass; two brushless DC drive motors and amplifiers; a brushless DC steering motor and amplifier; brake system; RF emergency brake system; DGPS receiver; a DME computer such as a PC104 computer that performs functions such as the following example functions: Guidance, Navigation and Control (GNC) computations; analog and digital data input and output; inputs, including: differential GPS information; electronic compass (heading angle); yaw rate; drive motor speed; steering angle; drive motor amplifier temperature; drive motor winding temperature; and outputs, including: drive motor torque command; steer motor angle command; brake command; system health monitoring; and data collection, for instance. Other or fewer components may be used in various example embodiments.

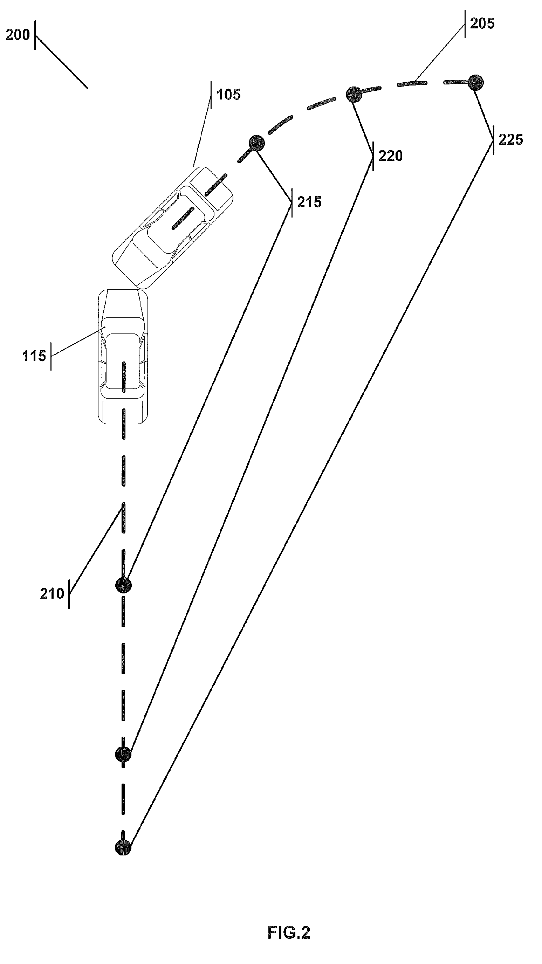

Prior to testing, paired time-space trajectories for the subject vehicle 105 and DME 115 (preferably loaded with a soft CP) may be generated. For example, FIG. 2 illustrates such a paired time-space trajectory 200. Subject vehicle 105 has a trajectory 205, while the DME 115 (here shown loaded with a soft CP, this combination is sometime referred to as the GST) has a trajectory 210. The time-space trajectories for each involved vehicle are generated such that spatial (e.g., X, Y, Z) waypoints are defined for each vehicle at specific, non-absolute (relative) points in time. In general, the waypoints are not required to occur at set spatial or temporal intervals; however, waypoints in each trajectory should occur at the same relative timing. In other words, way point 1 (215) occurs at the same relative time in the scenario for both the subject vehicle 105 and DME 115. Likewise waypoint 2 (220) occurs at the same time for both the subject vehicle 105 and DME 115, as does waypoint 3 (225). Further, a speed is defined for each vehicle at each waypoint, as well as a ratio of the slave vehicle speed, relative to the master vehicle's speed at each waypoint. The trajectory file for the subject vehicle has an array of waypoints, and the DME trajectory file has a corresponding array of waypoints, such that if the subject vehicle position within its own trajectory is known, the corresponding waypoint in the DME trajectory file can be determined, which indicates a target position for the DME.

One embodiment of a trajectory file is an ASCII file with a format as depicted in Table 1 below. The files may include some basic header information and a set of data for each waypoint. Each line in the file defines a waypoint and various data associated with such waypoint. A waypoint is a point in space along the vehicle's path. Each subject vehicle waypoint corresponds to a DME waypoint such that, when the subject vehicle is at waypoint 10, for example, the DME should also be at its waypoint 10. The trajectory file may also consist of other data such as the speed ratio (SR) (ratio of this vehicle's speed to the other vehicle's speed) and the speed (Spd).

**Table 1: Sample Trajectory File**

| | | | |
|---|---|---|---|
| X(1) | Y(1) | SR(1) | Spd(1) |
| X(2) | Y(2) | SR(2) | Spd(2) |
| ... | ... | ... | ... |
| X(n-1) | Y(n-1) | SR(n-1) | Spd(n-1) |
| X(n) | Y(n) | SR(n) | Spd(n) |

Each vehicle in the test would have its own trajectory file. Alternatively, the GST system 100 may implement a single trajectory file with position and speed data for each vehicle at each waypoint.

The GST system 100 may use a trajectory file that causes a collision between the subject vehicle 105 and DME 115, as shown in FIG. 2. This also illustrates three waypoints, although it would be obvious that several waypoints may be used. Preferably the difference in time between waypoints is about 1/10^{th} of a second. By having such a high sampling of waypoints along the trajectories, the GST system 100 can more effectively control the various vehicles and ensure the proper collision and performance.

These trajectories should be physics-based, and either can be hypothetical or reconstructed real-world crash scenarios. Trajectories can be specified to result in no collision, or any manner of collision between the subject vehicle 105 and DME 115, and can include variations in speed and path curvature for both the subject vehicle 105 and DME 115. The spatial trajectories may be stored in files which also include subject vehicle 105 and DME 115 speeds along their respective paths, and scenario-specific discrete events. These discrete events (*e.g*., point of brake application) can be used to control the timing of events in the subject vehicle 105 at known points along the subject vehicle 105 path. These can be used to initiate open-loop braking, illuminate LEDs, or provide audible alerts within the subject vehicle 105, for example.

In various embodiments a GST system 100 may have, for instance, four different modes of operation: hold; manual; semi-autonomous; and fully-autonomous. The Hold Mode is the "idle" mode for the GST system. In this mode, the output signals to the steering and drive motors may be nullified, but the GUI for the base station 110 may continue to show data from the DME 115 and subject vehicle 105 sensors. Whenever the DME 115 is switched into this mode from one of the "active" modes (e.g., Manual, Semi-Autonomous or Fully Autonomous), data that was collected during the active mode may be transferred wirelessly to the computer associated with the base station 110 for further analysis.

The Manual Mode may be completely human-controlled via a joystick associated with the base station 110. In this mode, the operator may have remote control over the speed and steering of the DME 115. This mode may be useful in pre-positioning the DME 115 or for returning it to base for charging the batteries, routine service, or for shutting down the system.

The Semi-Autonomous Mode allows the operator of the base station 110 to control the speed of the DME 115 while the path following may be accomplished autonomously. This may be especially useful for pre-positioning the DME 115 before a given test run, since the DME 115 can be driven starting from any point on the test surface, and it will seek and converge on the desired path. The path-following GNC algorithm also may allow for operation in reverse, allowing the operator to drive the DME 115 in reverse along the path for fast repetition of tests.

The Fully Autonomous Mode may require no further inputs from the base station 110. In this mode, the subject vehicle 105 may be driven along the subject vehicle 105 path, and the DME 115 computes the speed and steering inputs necessary to move along its own path in coordination with the subject vehicle 105, as determined by the pre-programmed trajectory pair. In this way, the longitudinal position of the DME 115 may be driven by the longitudinal position of the subject vehicle 105 such that the DME 115 arrives at the pre-determined collision point at the same moment as the subject vehicle 105, even accommodating errors in the speed of the subject vehicle 105 (relative to the speed in the trajectory file) as it approaches by adjusting its own speed. As an option, the test engineer can enable a sub-mode in which, if the subject vehicle 105 driver or ACAT system begins to react to the impending collision, the DME 115 speed command may be switched to the speed contained in the trajectory file such that it is no longer dependent upon the speed of the subject vehicle 105. The switch to this sub-mode may be made automatically (mid-run) when the subject vehicle 105 acceleration exceeds a predetermined threshold (*e.g*., 0.3 g) or when subject vehicle 105 ACAT system activation may be sensed via a discrete input. In this way, the DME 115 passes through the would-be collision point at the speed prescribed in the trajectory file, irrespective of the position or speed of the subject vehicle 105.

During test setup, the paired time-space trajectories may be wirelessly loaded into the DME 115 on-board processor from the base station 110, and the DME 115 may be placed into the fully autonomous mode. As the subject vehicle 105 begins to travel along its path, its position (as measured by DGPS) may be transmitted wirelessly to the DME 115 processor, which may be programmed to accomplish lateral and longitudinal control to obtain the desired relative closed-loop trajectories. A given test run can culminate in a collision between the subject vehicle 105 and the DME 115, in which case, the DME 115 may be brought to a stop using a radio transmitter, separate from the WLAN, which can actuate the onboard brakes of the DME 115, and disable the drive motors. Test data may be automatically transmitted wirelessly from the DME 115 to the computer associated with the base station 110 once the operator transitions from the Fully Autonomous mode to the Hold mode.

The DME 115 may employ high-performance and high-efficiency components, allowing it to reach relatively high speeds and achieve high positional accuracy along its trajectory. Brushless DC drive motors efficiently deliver high power from a small package, and a DGPS receiver provides high positional accuracy.

Each vehicle (i.e., the DME 110 and the subject vehicle 105) is equipped with sensing technology allowing it to determine at least its position, its orientation and its velocity with respect to some known coordinate system. This sensing technology may consist of DGPS or any other position measurement system. The sensor optionally may be integrated with an Inertial Measurement Unit (IMU) which improves the accuracy of the sensed signals. Speed signals can be measured from GPS, an IMU, or an independent speed sensor (such as a Doppler or optical speed sensor).

Each DME is equipped with means to regulate its lateral path deviation (e.g., through means of automatic steering) and to regulate its speed along its predetermined path (e.g., through means of automatic speed control - motor, engine, brake, etc.).

The subject vehicle is equipped with a means of broadcasting its own position, speed and orientation, such that the GST System 100 can determine where the subject vehicle is along the predetermined subject vehicle path. This can be done by any means, including Wireless Local Area Network (LAN), Controller Area Network (CAN) or any other wired or wireless means of data transmission.

The subject vehicle can be manually operated by a human operator, or can be automatically or autonomously controlled to move along the intended path at varying speed. All vehicles are initially positioned at or near starting locations corresponding to positions within, or extrapolated from the predetermined trajectories. The subject vehicle is accelerated at an arbitrary rate to a speed corresponding to the speed in its own predetermined trajectory. Each of the DME vehicles (there can be more than one) computes its target speed as a ratio of the subject vehicle's speed at each waypoint location, and modulates its speed control to achieve this target speed. To further compensate for timing differences along the target path, each DME computes its longitudinal error along the path relative to its target position, as dictated by the position of the subject vehicle within its own trajectory, and each DME's target speed is modulated in order to minimize the longitudinal error along the predetermined trajectory.

Turning now to FIG. 3, the method 300 is an example embodiment of this method. The items in this figure that are framed by a dotted line are measured data, those framed by a dashed line are file data and those framed by a solid line are software calculations. This method 300 can be performed anywhere within the GST system 100. Optionally, some portions can be performed in one part of the GST system 100 (e.g. the DME 115), while other portions are performed in another (e.g. the base station 110).

Method 300 begins by determining the position of the subject vehicle and DME in steps 305 and 310 (this can be done by GPS measurements). The DME position 310 is used to calculate the position of the DME within the DME trajectory file 315, as shown in step 320. In step 330 a similar calculation is done for the subject vehicle within the subject vehicle trajectory file 325. Both the subject vehicle and DME trajectory files may be consolidated into a single file. At step 335, the method 300 uses the position of the subject vehicle within the trajectory file from step 330 to find the target position of the DME within the DME trajectory file. Recall that the trajectory files have discrete waypoints at simultaneous times, therefore knowing where the subject vehicle is along its trajectory, the method 300 can calculate where the DME should be according to the DME trajectory file.

DME's measured (or actual) distance is determined along the trajectory file at step 340. The difference between the two values of steps 335 and 340 calculated at step 342 would represent a distance deviation (i.e., the longitudinal error) from the programmed trajectory of the DME which, in turn, would prevent the collision from occurring at the expected conditions (i.e., position, speed, location of impact on the vehicle).

The method 300 must therefore compensate the speed of the DME to regulate this error, which is done at step 345. This speed compensation is added to a "feed-forward" speed, calculated in step 355, in order to determine the actual desired speed of the DME in step 365. The"feed-forward" speed is an estimate of the required speed of the DME to achieve the desired longitudinal control without any feedback from the DME (i.e., open-loop control). The "feed-forward" speed accounts for the current actual speed of the subject vehicle at step 350, by determining the speed ratio from the trajectory file for the DME at the current position. For example, at the current position the subject vehicle should be traveling at 60 KPH while the DME is to travel at 30KPH. The speed ratio is therefore 2:1, or the DME travels at 0.5 the speed of the subject vehicle. At step 355, the method uses the subject vehicle speed 360 to determine a "feed-forward" speed. For example, if the subject vehicle is traveling 20% faster than it should, at this waypoint, the "feed-forward" speed would be: 72KPH (speed of subject vehicle) X 0.5 (speed ratio) = 36KPH. Therefore, a component of the speed command to the DME is generated by the speed ratio applied to the measured speed of the subject vehicle.

The "feed-forward" speed and the speed compensation based on the error in distance (i.e., step 345) are combined at step 365 to calculate a new DME speed. The new instructions for the speed controller are calculated at step 370, which relies in part on the current speed of the DME 375. If for example, the commanded speed is 36KPH and the current DME speed is only 30KPH, then the system would know that it is far from the needed speed and might create an instruction for the controller to accelerate at a high rate to get to the target speed as fast as possible. If, however, the difference is only 0.5KPH, the acceleration in the controller instruction might be less. This may be accomplished using, for example, a Proportional/Integral (PI) feedback control to regulate and minimize the error.

The above description has been limited to a two vehicle scenario. However, it would be apparent to those in the art that these teaching can be used to control more than two vehicles. For example, the test scenario may require two DMEs to collide with the subject vehicle. In such a case, each vehicle would have its own trajectory file, and the speed and position of each vehicle can be controlled by the method 300 described above. The GST System 100 would run the method 300 for the second DME as it did for the first, keeping the second vehicle as true to the trajectory as possible.

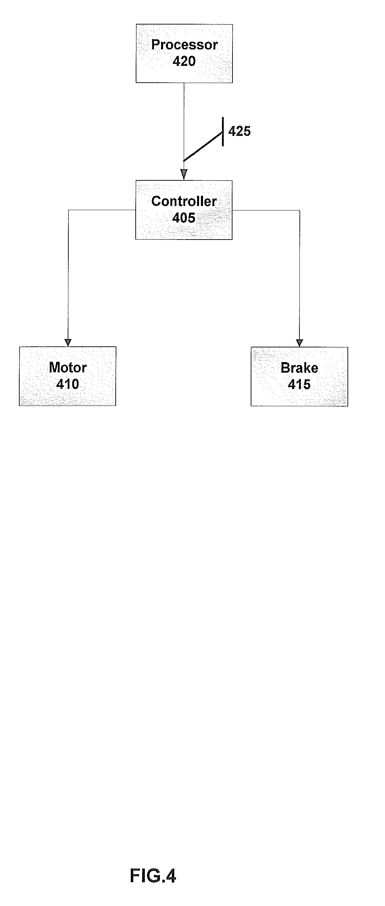

FIG. 4 illustrates the DME 115 which has a speed controller 405, motor 410 that propels a wheel (not shown) and a brake 415. Depending on the controller instruction from the method 300, the controller may instruct the motor to accelerate or decelerate, and may instruct the brake to actuate. The instructions are provided by the processor 420 which performs the method 300. The processor, as described above, may be located in various locations within the GST System. In one embodiment, the processor 420 is located in the base station and the control instruction would be sent to the DME 115 via wireless signal 425.

## Claims

1. A Guided Soft Target (GST) system comprising:
a subject vehicle (SV) (105) with a SV position sensor and a SV speed sensor;
a dynamic motion element (DME) (115) with a DME position sensor wherein the DME (105) comprises a body comprising an upper surface wherein the upper surface is adapted to support a soft-body having the size and shape of a vehicle or a portion of a vehicle, the body having at least one tapered side so as to allow the subject vehicle to drive up to and on the upper surface with minimal to no damage to the subject vehicle (105) or the DME (115), the body further supported by a plurality of wheels;
a processor that is connected to a memory, the DME (115) and the SV (105), the processor being configured to determine a position of the SV from the SV position sensor (305) and a position of the DME from the DME position sensor (310);
a speed controller connected to a motor that propels a wheel and receiving control instruction from the processor;
a SV trajectory file (325) representing the trajectory of the SV and stored in the memory,
a DME trajectory file (315) representing the trajectory of the DME and stored in the memory,
**characterized in that**
the SV trajectory file (325) comprises an array of SV waypoints and an array of SV speeds such that the SV speeds are allocated to the SV waypoints;
the DME trajectory file (315) comprises an array of DME waypoints and DME speeds such that the DME speeds are allocated to the DME waypoints, wherein each DME waypoint with its allocated DME speed is allocated to a corresponding SV waypoint with its allocated SV speed in the SV trajectory file; and
the processor is further configured to perform the following steps:
(a) calculate the position of the SV along the trajectory represented by the SV trajectory file and determine the SV waypoint for that position in the SV trajectory file (330);
(b) determine the corresponding DME waypoint from the DME trajectory file (320) that is allocated to the SV waypoint in the SV trajectory file as calculated in step (a);
(c) calculate a longitudinal error (342) of the DME position in a form of a distance deviation along the trajectory for a determined waypoint;
(d) calculate a speed compensation based on the longitudinal error (345);
(e) determine a speed ratio from the SV trajectory file (325) and DME trajectory file (315) for the determined corresponding DME way point from step (b);
(f) determine the speed of the SV from the SV speed sensor (360);
(g) calculate a new DME speed;
(h) calculate a DME control instruction; and
(i) send the control instruction to the DME.

2. The GST system of claim 1, **characterized in that**
the DME (115) further comprises a speed controller connected to a motor that propels a wheel;
the speed controller receives a control instruction from the processor,
and **in that** the instruction is based on the calculation of step (d).

3. The GST system of claim 2, **characterized in that** the instruction comprises an acceleration of the motor.

4. The GST system of claim 2, **characterized in that** the control instruction is sent to the DME (115) via a wireless signal.

5. A method of controlling the speed of a dynamic motion element (DME) (115) used in testing a crash avoidance technology of a subject vehicle (SV) (105), wherein the DME (115) is connected to a processor, and wherein the processor is connected to a memory, the method comprising:
(a) providing a DME (115) comprising a body comprising an upper surface wherein the upper surface is adapted to support a soft-body having the size and shape of a vehicle or a portion of a vehicle, the body having at least one tapered side so as to allow the subject vehicle to drive up to and on the upper surface with minimal to no damage to the subject vehicle or the DME, the body further supported by a plurality of wheels;
(b) storing a SV trajectory file (325) in the memory representing the trajectory of the SV (105) and storing a DME trajectory file (315) in the memory representing the trajectory of the DME (115);
**characterized by**
(c) performing the storing of the SV trajectory file in the memory representing the trajectory of the SV by storing an array of SV waypoints and an array of SV speeds (325) such that the SV speeds are allocated to the SV waypoints;
(d) performing the storing of the DME trajectory file in the memory representing the trajectory of the DME by storing an array of DME waypoints and DME speeds (315) such that the DME speeds are allocated to the DME waypoints, wherein each DME waypoint with its allocated DME speed is allocated to a corresponding SV waypoint with its allocated SV speed in the SV trajectory file;
(e) determining, by the processor, actual positions of the SV (305) and the of the DME (310);
(f) calculating, by the processor, the position of the SV along a trajectory represented by the SV trajectory file (330) and determining the SV waypoint for that position in the SV trajectory file (320);
(g) determining, by the processor, the corresponding DME waypoint from the DME trajectory file (335) that is allocated to the SV waypoint in the SV trajectory file as calculated in step (f);
(h) calculating, by the processor, a longitudinal error of the DME (342) position in a form of a distance deviation along the trajectory for a determined waypoint;
(i) calculating, by the processor, a speed compensation based on the longitudinal error (345);
(j) determining, by the processor, a speed ratio (350) from the SV trajectory file (325) and the DME trajectory file (315) for the determined corresponding DME way point from step (g);
(k) determining, by the processor, the speed of the SV (105) from an SV speed sensor (360);
(l) calculating, by the processor, a new DME speed (365);
(m) calculating, by the processor, a DME control instruction (370); and
(n) sending, by the processor, the control instruction to the DME.

6. The method of claim 5, **characterized in that** the control instruction is sent wirelessly.

7. The method of claim 5, **characterized by**:
actuating, by the processor, a motor based on the control instruction.

8. The method of claim 5, **characterized by**:
actuating, by the processor, a brake based on the control instruction.

## Patentansprüche

1. Guided-Soft-Target(GST)-System aufweisend:
Ein Zielfahrzeug (SV) (105) mit einem SV-Positionssensor und einem SV-Geschwindigkeitssensor;
ein Dynamische-Bewegung-Element (DME) (115) mit einem DME-Positionssensor, wobei
das DME (105) einen Körper mit einer oberen Oberfläche aufweist, wobei die obere Oberfläche ausgestaltet ist zum Tragen eines Weichkörpers mit der Größe und Form eines Fahrzeugs oder eines Teils eines Fahrzeugs, wobei der Körper mindestens eine sich verjüngende Seiten aufweist, so dass es dem Zielfahrzeug ermöglicht wird,
auf die obere Oberfläche hinauf und auf der oberen Oberfläche mit minimalem bis keinem Schaden an dem Zielfahrzeug (105) oder dem DME (115) zu fahren, wobei der Körper ferner von einer Mehrzahl von Rädern getragen wird;
einen Prozessor, der mit einem Speicher, dem DME (115) und dem SV (105) verbunden ist, wobei der Prozessor eingerichtet ist, eine Position des SVs ausgehend von dem SV-Positionssensor (305) und eine Position des DMEs ausgehend von dem DME-Positionssensor (310) zu ermitteln;
eine Geschwindigkeitssteuereinrichtung, die mit einem Motor verbunden ist, der ein Rad antreibt, und die Steuerbefehle von dem Prozessor empfängt;
eine SV-Trajektoriendatei (325), die die Trajektorie des SVs repräsentiert und in dem Speicher gespeichert ist, eine DME-Trajektoriendatei (315), die die Trajektorie des DMEs repräsentiert und in dem Speicher gespeichert ist,
dadurch charakterisiert, dass
die SV-Trajektoriendatei (325) ein Feld von SV-Wegpunkten und ein Feld von SV-Geschwindigkeiten aufweist, so dass die SV-Geschwindigkeiten den SV-Wegpunkten zugeordnet sind;
die DME-Trajektoriendatei (315) ein Feld von DME-Wegpunkten und DME-Geschwindigkeiten aufweist, so dass die DME-Geschwindigkeiten den DME-Wegpunkten zugeordnet sind, wobei jeder DME-Wegpunkt mit seiner zugeordneten DME-Geschwindigkeit einem entsprechenden SV-Wegpunkt mit seiner zugeordneten SV-Geschwindigkeit in der SV-Trajektoriendatei zugeordnet ist; und
der Prozessor ferner eingerichtet ist, die folgenden Schritte durchzuführen:
(a) Berechnen der Position des SVs entlang der durch die SV-Trajektoriendatei repräsentierten Trajektorie und Ermitteln des SV-Wegpunkts für diese Position in der SV-Trajektoriendatei (330);
(b) Ermitteln des entsprechenden DME-Wegpunkts aus der DME-Trajektoriendatei (320), der dem wie in Schritt (a) berechneten SV-Wegpunkt in der SV-Trajektoriendatei zugeordnet ist;
(c) Berechnen eines longitudinalen Fehlers (342) der DME-Position in Form einer Entfernungsabweichung entlang der Trajektorie für einen ermittelten Wegpunkt;
(d) Berechnen einer Geschwindigkeitskompensation basierend auf dem longitudinalen Fehler (345);
(e) Ermitteln eines Geschwindigkeitsverhältnisses aus der SV-Trajektoriendatei (325) und der DME-Trajektoriendatei (315) für den ermittelten entsprechenden DME-Wegpunkt aus Schritt (b);
(f) Ermitteln der Geschwindigkeit des SVs ausgehend von dem SV-Geschwindigkeitssensor (360);
(g) Berechnen einer neuen DME-Geschwindigkeit;
(h) Berechnen eines DME-Steuerbefehls; und
(i) Senden des Steuerbefehls an das DME.

2. Das GST-System gemäß Anspruch 1, dadurch charakterisiert, dass
das DME (115) ferner eine Geschwindigkeitssteuereinrichtung aufweist, die mit einem Motor, der ein Rad antreibt, verbunden ist; wobei die Geschwindigkeitssteuereinrichtung einen Steuerbefehl von dem Prozessor empfängt,
und dadurch, dass der Befehl auf der Berechnung von Schritt (d) basiert.

3. Das GST-System gemäß Anspruch 2, dadurch charakterisiert, dass der Befehl eine Beschleunigung des Motors aufweist.

4. Das GST-System gemäß Anspruch 2, dadurch charakterisiert, dass der Steuerbefehl über ein drahtloses Signal an das DME (115) gesendet wird.

5. Verfahren zum Steuern der Geschwindigkeit eines Dynamische-Bewegung-Elements (DME) (115), verwendet beim Testen einer Unfallvermeidungstechnologie eines Zielfahrzeugs (SV) (105), wobei das DME (115) mit einem Prozessor verbunden ist und wobei der Prozessor mit einem Speicher verbunden ist, wobei das Verfahren aufweist:
(a) Bereitstellen eines DMEs (115) mit einem Körper mit einer oberen Oberfläche, wobei die obere Oberfläche ausgestaltet ist zum Tragen eines Weichkörpers mit der Größe und Form eines Fahrzeugs oder eines Teils eines Fahrzeugs, wobei der Körper mindestens eine sich verjüngende Seiten aufweist, so dass es dem Zielfahrzeug ermöglicht wird, auf die obere Oberfläche hinauf und auf der oberen Oberfläche mit minimalem bis keinem Schaden an dem Zielfahrzeug oder dem DME zu fahren, wobei der Körper ferner von einer Mehrzahl von Rädern getragen wird;
(b) Speichern einer SV-Trajektoriendatei (325) in dem Speicher, die die Trajektorie des SVs (105) repräsentiert und Speichern einer DME-Trajektoriendatei (315) in dem Speicher, die die Trajektorie des DMEs (115) repräsentiert;
charakterisiert durch
(c) Durchführen des Speicherns der SV-Trajektoriendatei in dem Speicher, die die Trajektorie des SVs repräsentiert, durch Speichern eines Felds von SV-Wegpunkten und eines Felds von SV-Geschwindigkeiten (325), so dass die SV-Geschwindigkeiten den SV-Wegpunkten zugeordnet sind;
(d) Durchführen des Speicherns der DME-Trajektoriendatei in dem Speicher, die die Trajektorie des DMEs repräsentiert, durch Speichern eines Felds von DME-Wegpunkten und DME-Geschwindigkeiten (315), so dass die DME-Geschwindigkeiten den DME-Wegpunkten zugeordnet sind, wobei jeder DME-Wegpunkt mit seiner zugeordneten DME-Geschwindigkeit einem entsprechenden SV-Wegpunkt mit seiner zugeordneten SV-Geschwindigkeit in der SV-Trajektoriendatei zugeordnet ist;
(e) Ermitteln, durch den Prozessor, tatsächlicher Positionen des SVs (305) und des DMEs (310);
(f) Berechnen, durch den Prozessor, der Position des SVs entlang einer durch die SV-Trajektoriendatei repräsentierten Trajektorie (330) und Ermitteln des SV-Wegpunkts für diese Position in der SV-Trajektoriendatei (320);
(g) Ermitteln, durch den Prozessor, des entsprechenden DE-Wegpunkts aus der DME-Trajektoriendatei (320), der dem wie in Schritt (f) berechneten SV-Wegpunkt in der SV-Trajektoriendatei zugeordnet ist;
(h) Berechnen, durch den Prozessor, eines longitudinalen Fehlers der DME-Position (342) in Form einer Entfernungsabweichung entlang der Trajektorie für einen ermittelten Wegpunkt;
(i) Berechnen, durch den Prozessor, einer Geschwindigkeitskompensation basierend auf dem longitudinalen Fehler (345);
(j) Ermitteln, durch den Prozessor, eines Geschwindigkeitsverhältnisses (350) aus der SV-Trajektoriendatei (325) und der DME-Trajektoriendatei (315) für den ermittelten entsprechenden DME-Wegpunkt aus Schritt (g);
(k) Ermitteln, durch den Prozessor, der Geschwindigkeit des SVs (105) ausgehend von dem SV-Geschwindigkeitssensor (360);
(l) Berechnen, durch den Prozessor, einer neuen DME-Geschwindigkeit (365);
(m) Berechnen, durch den Prozessor, eines DME-Steuerbefehls (370); und
(n) Senden, durch den Prozessor, des Steuerbefehls an das DME.

6. Verfahren gemäß Anspruch 5, dadurch charakterisiert, dass der Steuerbefehl drahtlos gesendet wird.

7. Verfahren gemäß Anspruch 5, charakterisiert durch:
Betreiben, durch den Prozessor, eines Motors basierend auf dem Steuerbefehl.

8. Verfahren gemäß Anspruch 5, charakterisiert durch:
Betreiben, durch den Prozessor, einer Bremse basierend auf dem Steuerbefehl.

## Revendications

1. Système cible d'amortissement de crash (GST), comprenant :
- un véhicule sujet (SV) (105) doté d'un détecteur de position SV et d'un détecteur de vitesse SV ;
- un élément de mouvement dynamique (DME) (115) doté d'un détecteur de position DME, dans lequel le DME (115) comprend un corps qui comprend une surface supérieure, dans lequel la surface supérieure est adaptée afin de supporter un corps lisse qui présente la taille et la forme d'un véhicule ou d'une partie d'un véhicule, le corps présentant au moins un côté effilé de façon à permettre au véhicule sujet de se déplacer jusqu'à, et sur, la surface supérieure, avec un dommage minimum, voire aucun dommage, infligé au véhicule sujet (105) ou au DME (115), le corps étant supporté en outre par une pluralité de roues ;
- un processeur qui est connecté à une mémoire, au DME (115) et au SV (105), le processeur étant configuré de façon à déterminer une position du SV à partir du détecteur de position SV (305), et une position du DME à partir du détecteur de position DME (310) ;
- un contrôleur de vitesse connecté à un moteur qui entraîne une roue et qui reçoit une instruction de commande en provenance du processeur ;
- un fichier de trajectoire SV (325) qui représente la trajectoire du SV, et qui est stocké dans la mémoire ;
- un fichier de trajectoire DME (315) qui représente la trajectoire du DME, et qui est stocké dans la mémoire ;
**caractérisé en ce que** :
- le fichier de trajectoire SV (325) comprend un ensemble de points de cheminement SV et un ensemble de vitesses SV, de telle sorte que les vitesses SV soient attribuées aux points de cheminement SV ;
- le fichier de trajectoire DME (315) comprend un ensemble de points de cheminement DME et de vitesses DME, de telle sorte que les vitesses DME soient attribuées aux points de cheminement DME, dans lequel chaque point de cheminement DME avec sa vitesse DME attribuée, est attribué à un point de cheminement SV correspondant avec sa vitesse SV attribuée dans le fichier de trajectoire SV ; et
- le processeur est configuré en outre de façon à exécuter les étapes suivantes consistant à :
(a) calculer la position du SV le long de la trajectoire représentée par le fichier de trajectoire SV, et déterminer le point de cheminement SV pour cette position dans le fichier de trajectoire SV (330) ;
(b) déterminer le point de cheminement DME correspondant à partir du fichier de trajectoire DME (320) qui est attribué au point de cheminement SV dans le fichier de trajectoire SV, calculé dans l'étape (a) ;
(c) calculer une erreur longitudinale (342) de la position DME sous la forme d'un écart de distance le long de la trajectoire pour un point de cheminement déterminé ;
(d) calculer une compensation de vitesse sur la base de l'erreur longitudinale (345) ;
(e) déterminer un rapport de vitesse à partir du fichier de trajectoire SV (325) et du fichier de trajectoire DME (315) pour le point de cheminement DME correspondant déterminé à partir de l'étape (b) ;
(f) déterminer la vitesse du SV à partir du détecteur de vitesse SV (360) ;
(g) calculer une nouvelle vitesse DME ;
(h) calculer une instruction de commande DME ; et
(i) envoyer l'instruction de commande au DME.

2. Système GST selon la revendication 1, **caractérisé en ce que** :
- le DME (115) comprend en outre un contrôleur de vitesse connecté à un moteur qui entraîne une roue ;
- le contrôleur de vitesse reçoit une instruction de commande en provenance du processeur, et **en ce que** l'instruction est basée sur le calcul de l'étape (d).

3. Système GST selon la revendication 2, **caractérisé en ce que** l'instruction comprend une accélération du moteur.

4. Système GST selon la revendication 2, **caractérisé en ce que** l'instruction de commande est envoyée au DME (115) par l'intermédiaire d'un signal sans fil.

5. Procédé destiné à commander la vitesse d'un élément de mouvement dynamique (DME) (115) utilisé dans un essai d'une technologie d'évitement de crash d'un véhicule sujet (SV) (105), dans lequel le DME (115) est connecté à un processeur, et dans lequel le processeur est connecté à une mémoire, le procédé comprenant les étapes consistant à :
(a) fournir un élément DME (115) qui comprend un corps qui comprend une surface supérieure, dans lequel la surface supérieure est adaptée afin de supporter un corps lisse qui présente la taille et la forme d'un véhicule ou d'une partie d'un véhicule, le corps présentant au moins un côté effilé de façon à permettre au véhicule sujet de se déplacer jusqu'à, et sur, la surface supérieure, avec un dommage minimum, voire aucun dommage, infligé au véhicule sujet ou au DME, le corps étant supporté en outre par une pluralité de roues ;
(b) stocker un fichier de trajectoire SV (325) dans la mémoire, qui représente la trajectoire du SV (105) et stocker un fichier de trajectoire DME (315) dans la mémoire, qui représente la trajectoire du DME (115) ;
**caractérisé par** les étapes consistant à :
(c) exécuter le stockage du fichier de trajectoire SV dans la mémoire, qui représente la trajectoire du SV, en stockant un ensemble de points de cheminement SV et un ensemble de vitesses SV (325), de telle sorte que les vitesses SV soient attribuées aux points de cheminement SV ;
(d) exécuter le stockage du fichier de trajectoire DME dans la mémoire, qui représente la trajectoire du DME, en stockant un ensemble de points de cheminement DME et de vitesses DME (315), de telle sorte que les vitesses DME soient attribuées aux points de cheminement DME, dans lequel chaque point de cheminement DME avec sa vitesse DME attribuée, est attribué à un point de cheminement SV correspondant avec sa vitesse SV attribuée, dans le fichier de trajectoire SV ;
(e) déterminer, à l'aide du processeur, les positions réelles du SV (305) et du DME (310) ;
(f) calculer, à l'aide du processeur, la position du SV le long d'une trajectoire représentée par le fichier de trajectoire SV (330) et déterminer le point de cheminement SV pour cette position dans le fichier de trajectoire SV (320) ;
(g) déterminer, à l'aide du processeur, le point de cheminement DME correspondant à partir du fichier de trajectoire DME (335) qui est attribué au point de cheminement SV dans le fichier de trajectoire SV, calculé dans l'étape (f) ;
(h) calculer, à l'aide du processeur, une erreur longitudinale de la position DME (342) sous la forme d'un écart de distance le long de la trajectoire pour un point de cheminement déterminé ;
(i) calculer, à l'aide du processeur, une compensation de vitesse sur la base de l'erreur longitudinale (345) ;
(j) déterminer, à l'aide du processeur, un rapport de vitesse (350) à partir du fichier de trajectoire SV (325) et du fichier de trajectoire DME (315) pour le point de cheminement DME correspondant déterminé à partir de l'étape (g) ;
(k) déterminer, à l'aide du processeur, la vitesse du SV (105) à partir d'un détecteur de vitesse SV (360) ;
(l) calculer, à l'aide du processeur, une nouvelle vitesse DME (365) ;
(m) calculer, à l'aide du processeur, une instruction de commande DME (370) ; et
(n) envoyer, à l'aide du processeur, l'instruction de commande au DME.

6. Procédé selon la revendication 5, **caractérisé en ce que** l'instruction de commande est envoyée de manière sans fil.

7. Procédé selon la revendication 5, **caractérisé par** une étape consistant à :
- actionner, à l'aide du processeur, un moteur sur la base de l'instruction de commande.

8. Procédé selon la revendication 5, **caractérisé par** une étape consistant à :
- actionner, à l'aide du processeur, un frein sur la base de l'instruction de commande.
